(19) Europäisches Patentamt / European Patent Office / Office européen des brevets

(11) **EP 3 959 016 B1**

(12) **EUROPÄISCHE PATENTSCHRIFT**

(45) Veröffentlichungstag und Bekanntmachung des Hinweises auf die Patenterteilung:
**24.09.2025 Patentblatt 2025/39**

(21) Anmeldenummer: **20721497.4**

(22) Anmeldetag: **22.04.2020**

(51) Internationale Patentklassifikation (IPC):
**B02B 1/00** $^{(2006.01)}$     **B02B 5/02** $^{(2006.01)}$
**B02C 9/04** $^{(2006.01)}$     **B02C 23/10** $^{(2006.01)}$

(52) Gemeinsame Patentklassifikation (CPC):
**B02B 1/00; B02B 5/02; B02C 9/04; B02C 23/10**

(86) Internationale Anmeldenummer:
**PCT/EP2020/061117**

(87) Internationale Veröffentlichungsnummer:
**WO 2020/216756 (29.10.2020 Gazette 2020/44)**

(54) **VERFAHREN ZUM KONDITIONIEREN VON PFLANZENSAMEN FÜR DIE ZERKLEINERUNG, INSBESONDERE ZUR BEEINFLUSSUNG DER ELASTIZITÄT DER PFLANZENSAMEN, UND ANLAGE ZUR ZERKLEINERUNG VON PFLANZENSAMEN**

METHOD FOR CONDITIONING PLANT SEEDS FOR MILLING, IN PARTICULAR FOR INFLUENCING THE ELASTICITY OF THE PLANT SEEDS, AND SYSTEM FOR MILLING PLANT SEEDS

PROCÉDÉ DE CONDITIONNEMENT DE SEMENCES VÉGÉTALES POUR LE CONCASSAGE, EN PARTICULIER POUR INFLUER SUR L'ÉLASTICITÉ DE SEMENCES VÉGÉTALES, ET INSTALLATION DE CONCASSAGE DE SEMENCES VÉGÉTALES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2019 DE 102019205793**

(43) Veröffentlichungstag der Anmeldung:
**02.03.2022 Patentblatt 2022/09**

(73) Patentinhaber:
• **Elea Service GmbH**
  **49610 Quakenbrück (DE)**
• **Mühlenchemie GmbH & Co. KG**
  **22926 Ahrensburg (DE)**

(72) Erfinder:
• **HEINZ, Volker**
  **49610 Quakenbrück (DE)**
• **POPPER, Lutz**
  **22527 Hamburg (DE)**
• **TOEPFL, Stefan**
  **49075 Osnabrück (DE)**

(74) Vertreter: **Grünecker Patent- und Rechtsanwälte PartG mbB**
  **Leopoldstraße 4**
  **80802 München (DE)**

(56) Entgegenhaltungen:
**DE-A1- 102017 202 684     DE-C- 735 937
FR-A1- 2 685 223**

**Beschreibung**

Die vorliegende Erfindung betrifft ein Verfahren zum Konditionieren von Pflanzensamen für die Zerkleinerung und zur Verbesserung der Durchfeuchtung der Pflanzensamen im Vergleich zu unbehandelten, nicht konditionierten Pflanzensamen.

Die vorliegende Erfindung betrifft ferner eine Anlage zur Zerkleinerung von Pflanzensamen, umfassend: eine Konditionierungsanlage zur Konditionierung der Pflanzensamen für die Zerkleinerung, eine Zerkleinerungsvorrichtung zur Zerkleinerung der konditionierten Pflanzensamen, und eine Trennvorrichtung zum Trennen unterschiedlicher Fraktionen der zerkleinerten Pflanzensamen.

Beispielsweise zur Mehlgewinnung muss der Mehlkörper (Endosperm) eines Getreidekorns von der Kleie (Samenschale, Aleuronschicht und Keimling) getrennt werden.

Um die Schale vom harten Kern zu trennen, werden die Körnerfrüchte konditioniert, indem die Schale angefeuchtet (genetzt) wird, damit sie zäher wird und sich so in möglichst wenigen Bruchstücken vom Kern trennen lässt.

Nachfolgend wird beispielhaft auf die Verarbeitung von Getreide als Beispiel von Pflanzensamen eingegangen. Die Vermahlung von Weizen spielt eine überragende Rolle, da weltweit 700 bis 750 Millionen Tonnen Weizen jährlich verarbeitet werden müssen.

Aus der Sicht eines Weizenmüllers setzt sich das Getreidekorn aus dem Mehlkörper, dem Keimling und der umliegenden Kleieschicht zusammen. Biologisch ist der Aufbau komplizierter. Die Kleie besteht aus vielen Schichten, die entwicklungsbiologisch den Zugriff von Schadorganismen auf den Mehlkörper verhindern sollen. Insbesondere die Samenschale (Testa) ist hydrophob, behindert also auch das Eindringen von Wasser. Unter der Kleie liegt die Aleuronschicht, die mit dem Mehlkörper, dem Endosperm, verbunden ist. Die Zellen des Endosperms entstehen in der Aleuronschicht. Dennoch zählt die Aleuronschicht müllerisch zur Kleie. Sie ist zwar reich an Proteinen, diese leisten aufgrund ihrer Struktur jedoch keinen positiven Beitrag zur Backfähigkeit eines Mehles. Zudem enthält sie viele Mineralien, die zu einer unerwünschten Erhöhung des Mineralstoffgehalts im Mehl führen würden. In vielen Ländern, so auch in Deutschland, werden Mehle nach ihrem Mineralstoffgehalt in verschiedene Mehltypen klassifiziert. Der Müller strebt dabei in der Regel eine hohe Ausbeute an Mehlen mit niedrigem Mineralstoffgehalt an, weil sie sich dank ihrer höheren Backfähigkeit und helleren Farbe besser vermarkten lassen.

Die Abtrennung der Kleie wird durch oberflächliches Anfeuchten (Netzen oder Benetzen) verbessert, da dadurch die Zähigkeit der Kleie steigt und sie somit beim Mahlvorgang nicht so leicht in kleine Stücke, die schwer vom restlichen Mehl zu trennen sind, zerfällt.

Darüber hinaus ist es bei der Mehlherstellung vorgesehen, auch den Mehlkörper anzufeuchten, da hierdurch dessen Mahleigenschaften verbessert werden und der zu erwartende Feuchtigkeitsverlust des Mehles während des Vermahlungsprozesses ausgeglichen wird. Die Netzung dient also auch zur Einstellung des Wassergehalts des Mehles und hat so einen hohen Einfluss auf die Qualität und Wirtschaftlichkeit des Endprodukts.

Für diese komplexe Aufgabe wird bislang eine zumeist zweistufige Netzung angewandt. In einem ersten Schritt wird auf das Getreide in einem Wirbeldurchlaufmischer ca. 2 - 5 % Wasser aufgesprüht und gleichmäßig auf die Kornoberfläche verteilt. Anschließend muss das Getreide 8 - 36 Stunden abstehen, um dem Wasser das Eindringen ins Korn zu ermöglichen. Die tatsächliche Abstehzeit hängt von der Beschaffenheit des Kornes ab. Große Körner benötigen länger als kleine, harte länger als weiche.

Das Wasser dringt dabei nicht auf breiter Front ein, sondern zunächst nur in Risse und Spalten (Kapillaren), die bis tief in den Mehlkörper gehen [Münzing, K., 2013, "Neue Erkenntnisse über Netzungs- und Aufmischeffekt bei Mahlweizen", Mühle Mischfutter 150(14), 246]. Dieser Vorgang ist nach ca. 1 Stunde beendet. Erst danach erfolgt eine allmähliche Ausbreitung des Wassers im gesamten Korn. Unmittelbar vor der eigentlichen Vermahlung erfolgt eine Schalennetzung mit dem Ziel, den äußeren Schichten eine höhere Zähigkeit zu verleihen.

Eine Mühle muss daher zusätzliche Lagerungskapazitäten in der Größenordnung einer Tagesproduktion vorhalten, was einen erheblichen Platzbedarf bedeutet und bei einer gewünschten Erweiterung ein limitierender Faktor sein kann.

Zum Stand der Technik gehören mechanische Verfahren, die die Verteilung des Wassers auf der Oberfläche der Körner und das Eindringen in die Körner verbessern sollen. Ein solches Verfahren, dass auf Vibration basiert, wird in DE 41 27 290 A1 beschrieben.

Ebenfalls bekannt, zum Beispiel aus der WO 03/024242 A1, ist die Zugabe von Salzen oder Enzymen zum Netzwasser, wodurch das Ablösen der Kleie erleichtert werden soll.

Ähnliche Probleme bestehen bei der Konditionierung anderer Pflanzensamen für die Zerkleinerung. Zu Pflanzensamen im Sinne der vorliegenden Erfindung gehören insbesondere Körnerfrüchte und Hülsenfrüchte, also Getreide, wie Weizen, Roggen, Gerste, Hafer, Tritikale, und Mais, Reis, Hirse, als auch die zu den Leguminosen (Hülsenfrüchten) gehörenden Bohnen, Erbsen, Kichererbsen, Linsen, Sojabohnen.

Unter Zerkleinerung ist das Zerteilen fester Stoffe unter Wirkung mechanischer Kräfte zu verstehen. Die Zerkleinerung kann zum Beispiel durch Schlagen, Spalten, Reiben, Quetschen, Brechen, Druck, Scherung, Prall erfolgen. Auch Schälen, also das Aufbrechen bzw. Entfernen der Samenschale ist eine Zerkleinerung im Sinne dieser Erfindung.

Die FR 2 685 223 A1 betrifft eine Anlage zur kontinuierlichen Behandlung von Pflanzenkörnern oder Pflanzensamen. Die Vorrichtung umfasst eine Speichervorrichtung, eine Vorrichtung zum Befeuchten der Körner oder Samen, Mittel zum Mahlen der Körner oder Samen. Nach dem Mahlen entnommene Proben werden einer Messvorrichtung zur Bestimmung des Feuchtigkeitsgehaltes und von Verunreinigungen zugeführt. Ein Computer dient zur Steuerung und kontinuierlichen Führung dieser Anlage.

Die DE 10 2017 202 684 A1 betrifft ein Verfahren und eine Vorrichtung zur Behandlung von Schalenfrüchten, um Schäleigenschaften zu verbessern. Dabei wird die Schale der Schalenfrüchte durch Anlegen eines elektrischen Feldes erweicht.

In der DE 735 937 C ist ein Verfahren zur Erleichterung des Schälens bzw. Zermahlens von Getreide beschrieben. Dazu werden Getreidekörner, deren Schale feuchtigkeitsreicher als deren Kern ist, elektrisch hochfrequenten Wechselfeldern ausgesetzt. Durch die Hochfrequenzfelder wird Wärme sowohl innerhalb des Mehlkerns als auch innerhalb der Schale erzeugt. Die Feuchtigkeit dehnt sich durch die Erwärmung aus und wird vom Inneren des Korns nach außen hin abgedrängt. Dies hat zur Folge, dass der trockene Kern härter und die feuchte Schale weicher und elastischer wird, sodass sich die weiche Schale mittels bekannter Schäleinrichtungen vollkommen ablösen lässt.

Angesichts der oben genannten Probleme ist es eine Aufgabe der vorliegenden Erfindung, ein Verfahren und eine Vorrichtung zum Konditionieren von Pflanzensamen bereitzustellen, welche die Zerkleinerung der Pflanzensamen erleichtert und das Verhalten der Pflanzensamen während der Zerkleinerung positiv beeinflusst.

Die vorliegende Erfindung löst diese Aufgabe durch ein Verfahren zum Konditionieren von Pflanzensamen für die Zerkleinerung, das dadurch gekennzeichnet ist, dass die Pflanzensamen einem nicht-thermisch wirkenden elektrischen Feld ausgesetzt werden.

Die eingangs genannte Anlage zur Zerkleinerung von Pflanzensamen löst diese Aufgabe dadurch, dass die Konditionierungsanlage einen Kondensator zur Erzeugung eines auf die Pflanzensamen wirkenden nicht-thermisch wirkenden elektrischen Feldes zur Verbesserung der Durchfeuchtung der Pflanzensamen im Vergleich zu unbehandelten, nicht konditionierten Pflanzensamen aufweist wobei die Konditionierungsanlage ferner eine Benetzungsvorrichtung zur Befeuchtung der Pflanzensamen aufweist.

Es hat sich überraschenderweise gezeigt, dass die Einwirkung eines elektrischen Feldes auf Pflanzensamen deren Struktur und Textur, insbesondere deren Elastizität schnell und auf einfache Weise so modifiziert, dass sich die Pflanzensamen besonders gut zerkleinern lassen. Durch die Einwirkung eines elektrischen Feldes lassen sich Pflanzensamen, beispielsweise Kichererbsen, Reis und Sojabohnen, besser schälen, d.h. die Schale lässt sich erstaunlicherweise einfacher, nahezu rückstandfrei und somit besser entfernen als bei unbehandelten Pflanzensamen. Beispielsweise wurde überraschenderweise herausgefunden, dass Pflanzensamen, zum Beispiel trockene Körner, nach der Behandlung mit einem elektrischen Feld eine elastischere Samenschale aufweisen, was die Zähigkeit der Samenschale erhöht und die Zerkleinerungseigenschaften verbessert. Zudem wurde überraschenderweise herausgefunden, dass Pflanzensamen, die einem elektrischen Feld ausgesetzt werden, sich besser mit einer Flüssigkeit benetzen und durchfeuchten lassen. Unter Benetzung bzw. Benetzbarkeit ist das Verhalten der Pflanzensamenoberfläche bei Kontakt mit Flüssigkeiten zu verstehen. Erwünscht ist eine möglichst schnelle und vollständige Benetzung, bei welcher sich die Flüssigkeit auf der Oberfläche ausbreitet und an der Oberfläche haftet. Unter Durchfeuchtung ist eine Verteilung der Flüssigkeit im gesamten Pflanzensamen, also auch im inneren Endosperm bzw. Mehlkörper zu verstehen. Wo von einer Verbesserung die Rede ist, ist ein Vergleich der erfindungsgemäß konditionierten Pflanzensamen mit entsprechend unkonditionierten Pflanzensamen, die keinem elektrischen Feld ausgesetzt wurden, gemeint.

Die Elastizität eines Pflanzensamens kann beispielsweise mittels eines Texture Analyser anhand der maximalen Kompressionskraft ermittelt werden. Mit einer solchen Maschine kann der Pflanzensamen mit einer konstanten Geschwindigkeit von beispielsweise 1 Millimeter pro Sekunde komprimiert werden und eine Kraft-Weg-Kurve aufgezeichnet werden. Für die Kompression kann beispielsweise ein Aluminiumzylinder mit einem Durchmesser von 15 Millimeter eingesetzt werden, unter welchem der Samen mit seiner Samenfalte nach unten platziert wird. Die Textur eines Pflanzensamens kann beispielsweise mittels international anerkannter Verfahren, wie dem AACCI-Verfahren 55-30.01 bestimmt werden. Dabei wird die Textur eines Weizenkorns, die wichtige Auswirkungen auf die Mahlqualität und auf Parameter wie beschädigte Stärke, Wasseraufnahme und Gasproduktion hat, bestimmt, indem die relative Härte bei allen Weizenarten mittels Bestimmung des Partikelgrößenindex durch Mahlen und Sieben ermittelt wird. Die beim Sieben gewonnenen Daten werden durch die Verwendung einer Tabelle in eine relative Härte umgewandelt. Auch das internationale Verfahren AACCI 55-31.01 kann zur Bestimmung der Textur eines Weizenkorns durch industrielle Messung der Kraft, die zum Zerkleinern von Weizenkörnern erforderlich ist, eingesetzt werden. Das Einzelkern-Charakterisierungssystem-Instrument wird dabei kalibriert, um die Kerntextur nach dem AACC-Verfahren 39-70.02 (Nahinfrarot-Verfahren) oder einer Modifikation des Verfahrens 55-30.01 unter Verwendung einer Zyklon-Probenmühle (Laufradtyp) zu berechnen. Diese Methode ist beispielsweise auf alle Weizenarten und hülsenlose Gerste anwendbar. Eine verbesserte Benetzbarkeit bzw. Durchfeuchtung zeigt sich beispielsweise dadurch, dass entweder mehr Flüssigkeit die Pflanzenschale benetzt bzw. in das Endosperm eindringt und im Pflanzensamen gebunden wird, oder dass eine vergleichbare Menge an Flüssigkeit bei den konditionierten Pflanzensamen schneller die Samenschale benetzt bzw. in das Endosperm eindringt.

Die Erfindung kann mit den folgenden, jeweils für sich vorteilhaften und beliebig miteinander kombinierbaren Weiterentwicklungen und vorteilhaften Ausgestaltungen weiter verbessert werden.

Beim Aussetzen der Pflanzensamen mit einem elektrischen Feld können die Pflanzensamen elektroporiert werden, d.h. die Zellmembran wird vorübergehend (reversibel) oder dauerhaft (irreversibel) permeabel. Das angelegte elektrische Feld kann zudem einen kontrollierten Zellaufschluss bewirken, bei dem der Grad des Zellaufschlusses auf einen vorbestimmten Wert eingestellt wird. Das angelegte elektrische Feld ist ein nicht-thermisch wirkendes elektrisches sein, bei dem die Energieobergrenze so bemessen ist, dass im Wesentlichen keine Erwärmung der Pflanzensamen im Sinne einer ohmschen Erhitzung stattfindet.

Beim Behandeln mit bzw. beim Anlegen des elektrischen Feldes kann ein Energieeintrag von wenigstens 1 kJ/kg in die Pflanzensamen erfolgen. Ein Energieeintrag in dieser Größenordnung ist gut geeignet, die Textur und Struktur der Samen zu modifizieren und somit die Elastizität bzw. Benetzbarkeit/Durchfeuchtung der Pflanzensamen zu verbessern. Um den Energieeintrag zu optimieren und eine energetisch unnötige Überbehandlung der Pflanzensamen zu vermeiden, kann der Energieeintrag in die Pflanzensamen 1 kJ/kg bis 20 kJ/kg, vorzugsweise von 8 kJ/kg bis 12 kJ/kg in die Pflanzensamen betragen.

Es hat sich ferner gezeigt, dass es vorteilhaft ist, wenn die Pflanzensamen einem elektrischen Feld von 0,3 kV/cm bis 10 kV/cm, vorzugsweise von 2 kV/cm bis 4 kV/cm ausgesetzt werden. Derartige Feldstärken lassen sich mit handelsüblichen industriellen Kondensatoren erzielen, und vermeiden, dass unerwünschte thermische Effekte auftreten, die zu nicht beabsichtigten Produktveränderungen führen.

Besonders effektiv können die Pflanzensamen mittels elektrischer Pulse konditioniert werden, wobei die Pflanzensamen einem gepulsten elektrischen Feld ausgesetzt werden. Die erfindungsgemäße Anlage kann hierzu beispielsweise einen Kondensator mit wenigstens zwei Elektroden vorsehen, die mit einem Impulsgenerator als Spannungsquelle verbunden sind. Kondensator und Elektroden können Teile eines Elektroporators zu Behandlung der Pflanzensamen mit einem gepulsten elektrischen Feld darstellen. Das elektrische Feld, insbesondere die elektrischen Pulse, können sowohl durch Direktkontakt des Kondensators bzw. dessen Elektroden mit den Pflanzensamen, als auch über Fluide erzeugt werden, wobei die Pflanzensamen ganz oder teilweise in die Fluide eingelegt werden. Dabei können verschiedene Elektrodenformen zur Anwendung kommen, beispielsweise Platten-, Ring-, Gitter-, Hohl- oder Durchflusselektroden, die auf verschiedenste Art, beispielsweis parallel, koaxial, kollinear, konisch oder als Ringspalt angeordnet sein können. Als Impulsgenerator kann ein Hochspannungsimpulsgenerator, beispielsweise ein Marx-Generator eingesetzt werden, der elektrische Felder in Form von kurzen Pulsen im Mikro- bis Millisekundenbereich einer hohen Spannung im kV-Bereich erzeugt. Derartige Hochspannungsimpulse bewirken bei den zu konditionierenden Pflanzensamen eine Elektroporation, was insbesondere eine Permeabilisierung der Zellmembran zur Folge hat und die Struktur und Textur der Pflanzensamen auf besonders einfache und nicht-thermische Art und Weise vorteilhaft beeinflusst.

Im Sinne einer Zeit- und Energieoptimierung können die Pflanzensamen mit wenigstens 10 elektrischen Pulsen, vorzugsweise 10 bis 200 elektrischen Pulsen und bevorzugt 30 bis 50 elektrischen Pulsen erweicht werden.

Gemäß einer weiteren Ausführungsform kann die Elastizität der Pflanzensamen beim Konditionieren im Vergleich zu nicht-konditionierten Pflanzensamen verbessert werden. Die Elastizität kann dabei insbesondere auf einen bestimmten Elastizitätsbereich eingestellt werden, der auf die angestrebte Teilchengröße bzw. den Mahlgrad oder Ausmahlungsgrad ausgerichtet ist. Für die Teilchengröße gilt beispielsweise, dass feingemahlenes Mehl eine Teilchengröße von < 180 $\mu$m, sogenannter Gries eine Teilchengröße von 300 bis 1000 $\mu$m und Schrot eine Teilchengröße von mehr als 1000 $\mu$m aufweist. Der Feinheitsgrad zwischen Mehl und Gries wird als Dunst bezeichnet und liegt bei einer Teilchengröße von 180 bis 300 $\mu$m. Als Ausmahlungsgrad wird insbesondere bei der Getreideverarbeitung in der Mühle beschrieben, wieviel Mehl aus 100 kg Getreide hergestellt werden kann. In Deutschland lassen sich für Weizen beispielsweise Aussagen über den Ausmahlungsgrad den entsprechenden Mehlbezeichnungen, zum Beispiel den deutschen DIN-Bezeichnungen Typ 405, Typ 550, Typ 1050 oder Vollkorn beschreiben. Entsprechende Typisierungen gibt es auch für Backschrote oder Roggenmehl.

Besonders bevorzugt kann die Elastizität der Samenschale und/oder die Elastizität des Samenkerns, insbesondere des Endosperms beim Konditionieren modifiziert werden. Unter dem Pflanzenkern ist dabei alles innerhalb der Samenschale, einschließlich des Endosperms und des Embryos bzw. Keimling zu verstehen. Man kann durch das erfindungsgemäße Konditionieren die Elastizität der Samenschale so einstellen, dass sich die Schale bei der Zerkleinerung einfach, nahezu rückstandsfrei vom Samenkern entfernen lässt. Gleichzeitig kann auch die Elastizität des Samenkerns so eingestellt werden, dass der geschälte Samenkern für seine Weiterverarbeitung, z.B. weitere Zerkleinerung oder Erhalt im Ganzen vorbereitet ist. So kann beispielsweise die Elastizität bei Körnerfrüchten so eingestellt werden, dass die Elastizität der Kleie verbessert und die Elastizität des Mehlkörpers unverändert spröde verbleibt. Dies bewirkt in vorteilhafterweise, dass die elastischere und somit zähere Kleie beim Zerkleinern in weniger Bruchstücke zerfällt als der sprödere Kern und sich die Kleie somit besser vom gemahlenen Mehlkörper abtrennen lässt.

Gemäß einer weiteren Ausführungsform kann den Pflanzensamen eine Befeuchtungsflüssigkeit zugegeben werden, bevor oder während sie dem elektrischen Feld ausgesetzt werden. Die Konditionierungsanlage der erfindungsgemäßen Anlage kann dazu beispielsweise eine Benetzungsvorrichtung zur Befeuchtung der Pflanzensamen aufweisen, beispielsweise in Form von Sprühdüsen, über welche die Pflanzensamen oberflächlich mit einer Befeuchtungsflüssigkeit beaufschlagt werden. Den Pflanzensamen kann beispielsweise Befeuchtungsflüssigkeit wie Wasser, in einer Größenordnung von 0,5 bis 20 %, vorzugsweise 2 bis 5 % zugegeben werden.

Die Angabe der % Netzwassermenge bzw. Befeuchtungsflüssigkeit beziehen sich auf das ungenetzte Getreide. Wenn also 1000 kg Weizen mit 2% genetzt werden sollen, werden 20 kg Wasser benötigt. Allerdings wird zur Berechnung der nötigen Wassermenge natürlich die Gesamtmasse berücksichtigt. Führungsgröße ist die gewünschte Vermahlungsfeuchtigkeit unter Berücksichtigung der Ausgangsfeuchte. Die Formel dafür lautet:

$$\% \ Wasserzugabe = ((100)*(Zielfeuchte-Ausgangsfeuchte))/(100-Zielfeuchte)$$

Beispiel: 14% Ausgangsfeuchte müssen mit 2,99% genetzt werden, um 16,5% Endfeuchte zu erreichen.

Es hat sich ferner gezeigt, dass die Konditionierung mittels elektrischer Felder bereits mit einer relativ geringen Menge an Benetzungsflüssigkeit zu einer vorteilhaften Benetzung und Durchfeuchtung führt. Beispielsweise kann das Massenverhältnis von Befeuchtungsflüssigkeit zu Pflanzensamen während der Behandlung mittels eines elektrischen Feldes bei 1:1 bis 20:1, vorzugsweise bei 1:1 bis 10:1 liegen. Das Massenverhältnis wird einerseits unter Berücksichtigung der gewünschten Wasseraufnahme, andererseits durch die Ausführung der Einrichtung zur Elektroporation und zur Produktförderung beeinflusst. Sofern für die Förderung durch die Behandlungseinrichtung oder den Ausgleich eventueller Hohlräume während der Behandlung eine höhere Wasserzugabe erforderlich ist kann anschließen ein Trennschritt zur Abtrennung überschüssigen Wassers erfolgen.

Das Konditionieren der Pflanzensamen mit einem elektrischen Feld, speziell, wenn eine Elektroporation durchgeführt wird, erleichtert das Anhaften der Befeuchtungsflüssigkeit an der Samenschale, was die Benetzung signifikant verbessert. Zudem beschleunigt die erfindungsgemäße Konditionierung das Eindringen der Flüssigkeit bis zum inneren Mehlkörper, was die Durchfeuchtung und die erforderlichen Abstehzeiten, die bei Getreide üblicherweise bei 8 bis 36 Stunden liegen, signifikant reduziert. Die Konditionierung mittels der elektrischer Felder sorgt somit nicht nur für eine positive Texturänderung der Pflanzensamen, sondern auch für eine verbesserte Benetzung und Durchfeuchtung und somit für geringere Abstehzeiten.

Als Abstehzeit wird die Zeit bezeichnet, welche benötigt wird, damit Wasser bis ins Innere des Pflanzensamens, beispielsweise des Korns eindringt. Die erfindungsgemäße Anlage weist hierzu im Rahmen ihrer Konditionierungsanlage wenigstens eine Abstehzelle auf. Die Elektroden des Kondensators können Teil der Abstehzelle sein, oder der Abstehzelle vorgelagert, beispielsweise unmittelbar vor oder in einen Förderer oder Dosierer zum Transport der Pflanzensamen in die Abstehzelle angeordnet sein. Die Benetzungsvorrichtung der Konditionierungsanlage kann ebenfalls Teil der Abstehzelle sein bzw. den Elektroden vorgelagert oder in den Elektroporator integriert sein.

Gemäß einem weiteren Ausführungsbeispiel können die Pflanzensamen einem vorbestimmten Druck und/oder einer vorbestimmten Temperatur ausgesetzt werden. Das Aussetzen einer vorbestimmten Temperatur bzw. eines vorbestimmten Druckes kann während des Aussetzens eines elektrischen Feldes, oder auch dem elektrischen Feld nachgeschaltet, beispielsweise während der Abstehzeit erfolgen, bei welcher mit dem elektrischen Feld konditionierten Pflanzensamen in einer Abstehzelle verweilen. Der Druck bzw. die Temperatur kann beispielsweise so gewählt werden, dass bestimmte Enzyme, welche die Textur der Pflanzensamen vorteilhaft beeinflussen bzw. die Wirkung der Benetzungsflüssigkeit beschleunigen, nahe dem Temperaturoptimum (der Temperatur mit der höchsten Enzymaktivität) sind. Die Konditionierungsanlage kann hierzu beispielsweise einen Temperaturregler und/oder einen Druckregler aufweisen. Mit Hilfe dieser Regler kann beispielsweise die Temperatur bzw. der Druck in dem Elektroporator und/oder in der Abstehzelle auf einen vorbestimmten Sollwert eingestellt und gehalten werden.

Gemäß einer weiteren Ausführungsform können Enzyme im Rahmen des erfindungsgemäßen Konditionierungsverfahrens auf Bestandteile der Pflanzensamen einwirken. Es hat sich gezeigt, dass beispielsweise endogene Enzyme durch eine Elektroporation freigesetzt werden und ggf. nach Aktivierung durch Einstellung einer bestimmten Temperatur, eines bestimmten Drucks oder einfach einer bestimmten Abstehzeit, aktiviert werden können. Auch über die Wahl des pH-Wertes oder die Polarität der Benetzungsflüssigkeit könnte man die erwünschte Enzymaktivität positiv beeinflussen. Es ist auch möglich, während des Konditionierens Enzyme zu den Pflanzensamen zuzugeben, beispielsweise während oder nach dem Aussetzen eines elektrischen Feldes. Denkbar ist beispielsweise, die Enzyme mit der Befeuchtungsflüssigkeit zu mischen, welche Befeuchtungsflüssigkeit dann den Pflanzensamen zugegeben wird. Vor allem mit hemizellulytischen Enzymen kann eine signifikante Absenkung der notwendigen Abstehzeit und eine Verbesserung der Trennung von Endosperm und Samenschale bzw. von Kleie und Mehlkörper und damit die Mehlausbeute erreicht werden. Beispielhafte Enzyme sind Hemizellulasen, Zellulasen, Glukanasen, Laccasen, Proteasen, Amylasen und andere Enzyme, die auf Bestandteile der Pflanzensamen, insbesondere Kornbestandteile wirken.

Im Folgenden wird die Erfindung anhand vorteilhafter Ausgestaltungen mit Bezug auf die Zeichnungen und nachfolgenden Versuchsbeispielen näher erläutert. Die dabei dargestellten vorteilhaften Weiterentwicklungen und Ausgestaltungen sind jeweils voneinander unabhängig und können beliebig miteinander kombiniert werden, je nachdem, wie es im Anwendungsfall notwendig ist.

Es zeigen:

Fig. 1:     eine schematische Darstellung einer beispielhaften Ausführungsform einer gemäßen Anlage zur Zerkleinerung von Pflanzensamen;

Fig. 2:     Fotos von Weizenkörnern nach deren Quetschung in einem Textur-Analyzer: eine Kontrolle trocken, eine Kontrolle nach Einweichen, und eine Probe nach Behandlung mit einem elektrischen Feld und Einweichen;

Fig.3:     eine Abbildung zur Veranschaulichung der Charakterisierung der Untersuchungspositionen im Rahmen einer EDX (energiedispersive Röntgenspektroskopie)-Analyse für die Ermittlung der Verteilung von Sauerstoff in Weizenkörnern;

Fig. 4:     eine Grafik zur Veranschaulichung der Durchfeuchtung von unbehandelten Kontrollproben unmittelbar zu Beginn der Durchfeuchtung;

Fig. 5:     eine Grafik zur Veranschaulichung der Durchfeuchtung von mittels elektrischer Felder konditionierter Kornproben unmittelbar zu Beginn der Durchfeuchtung;

Fig. 6:     eine Grafik zur Veranschaulichung der Durchfeuchtung von mittels elektrischer Felder konditionierter Kontrollproben nach 10 Stunden der Durchfeuchtung;

Fig. 7:     eine Grafik zur Veranschaulichung der Durchfeuchtung von unbehandelten Kornproben nach 24 Stunden der Durchfeuchtung; und

Fig. 8:     ein Diagramm zur Veranschaulichung der besseren Zerkleinerung erfindungsgemäß behandelter Pflanzensamen.

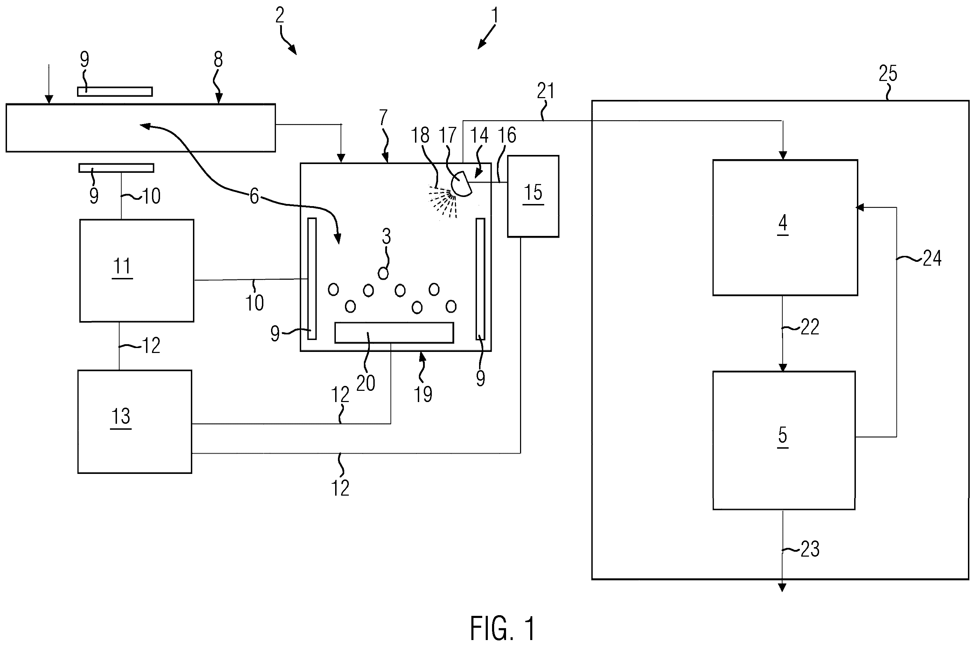

Nachfolgend werden ein beispielhaftes Verfahren zum Konditionieren von Pflanzensamen sowie eine beispielhafte Ausführungsform einer Anlage zur Zerkleinerung von Pflanzensamen gemäß der vorliegenden Erfindung unter Bezugnahme auf die Fig. 1 erläutert.

Die in Fig. 1 gezeigte Anlage 1 umfasst eine Konditionierungsanlage 2 zur Konditionierung von Pflanzensamen 3, eine Zerkleinerungsvorrichtung 4 zur Zerkleinerung der konditionierten Pflanzensamen, und eine Trennvorrichtung 5 zum Trennen unterschiedlicher Fraktionen der zerkleinerten Pflanzensamen. Die Pflanzensamen 3 sind in der Fig. 1 schematisch als Kreise gezeigt.

Die Konditionierungsanlage 2 umfasst einen Kondensator 6 zur Erzeugung eines elektrischen Feldes.

In dem gezeigten Ausführungsbeispiel umfasst die Konditionierungsanlage eine Abstehzelle 7 sowie eine Dosiervorrichtung 8, mit deren Hilfe Pflanzensamen 3 in die Abstehzelle 7 eingeführt werden, was durch Pfeile symbolisiert ist.

In der gezeigten Ausführungsform umfasst der Kondensator 6 zwei Elektroden 9, die über Energieleitungen 10 mit einer Spannungsquelle 11 verbunden sind. Es sind beispielhaft zwei Kondensatoren 6 gezeigt. Die Elektroden 9 des einen Kondensators sind in der Abstehzelle 7 angeordnet und können ein elektrisches Feld in der Abstehzelle 7 erzeugen. Der andere Kondensator 6 ist im Bereich der Dosiervorrichtung 8 vorgesehen und so ausgestaltet, dass Pflanzensamen 3 bei Durchlaufen der Dosiervorrichtung 8 einem elektrischen Feld ausgesetzt werden können. Selbstverständlich müssen nicht zwangsläufig zwei Kondensatoren vorgesehen sein, es wäre genauso gut möglich, den Kondensator lediglich in der Abstehzelle 7 bzw. lediglich im Bereich der Dosiervorrichtung 8 vorzusehen. Der Übersichtlichkeit halber wurde nur eine Energieleitung 10 zu einer der beiden Elektroden 9 eines Kondensators 10 eingezeichnet.

In der gezeigten Ausführungsform sind die Elektroden 9 eines Kondensators 6 parallel zueinander angeordnet, was ein homogenes elektrisches Feld zur gleichmäßigen Probenbehandlung erzeugen lässt. Es sind allerdings auch andere Varianten der Elektrodenanordnung denkbar, beispielsweise eine koaxiale oder kollineare Anordnung.

Als Spannungsquelle 11 kann ein Impulsgenerator, beispielsweise ein Hochspannungsimpulsgenerator wie ein Marx-Generator eingesetzt werden, mit dem elektrische Impulse einer hohen Spannung im Kilovoltbereich und einer kurzen Dauer im Mikro- bis Millisekundenbereich generiert werden können.

Zur Konditionierung der Pflanzensamen 3 können beispielsweise wenigstens 10 elektrische Pulse, vorzugsweise 10 bis 200 und besonders bevorzugt 30 bis 50 elektrische Pulse eingebracht werden. Bei Anlegen eines elektrischen Feldes von 0,3 kV/cm bis 10 kV/cm erreicht man einen Energieeintrag von über 1 kJ/kg, beispielsweise von 1 kJ/kg bis 20 kJ/kg, vorzugsweise von 8 kJ/kg bis 12 kJ/kg in die Pflanzensamen 3.

Dadurch lässt sich ein kontrollierter Zellaufschluss der Pflanzensamen 3 erreichen, indem die Pflanzensamen 3 beispielsweise mittels des gepulsten elektrischen Feldes elektroporiert werden.

Die Spannungsquelle 11 ist über eine Steuerleitung 12 mit einer zentralen Steuereinheit 13 verbunden, welche die Spannungsquelle steuert.

In dem gezeigten Ausführungsbeispiel der Fig. 1 weist die Konditionierungsanlage 8 ferner eine Benetzungsvorrichtung 14 zur Befeuchtung der Pflanzensamen 3 auf. Die Benetzungsvorrichtung 14 zur Befeuchtung der Pflanzensamen 3 ist beispielhaft in der Abstehzelle 7 ausgestaltet. Sie weist einen Vorratsbehälter 15 auf, der über eine Zuführleitung 16 mit einer Sprühvorrichtung 17, die in der Abstehzelle 7 angeordnet ist, verbunden ist. In dem Vorratsbehälter 15 kann eine Befeuchtungsflüssigkeit 18 enthalten sein, die über die Zuführleitung 16 zur Sprühvorrichtung 17 transportiert und dort im Inneren der Abstehzelle 7 verteilt werden kann. Die Befeuchtungsflüssigkeit 18 kann auf diese Weise den Pflanzensamen 3 zugegeben werden. Die Zugabe der Befeuchtungsflüssigkeit 18 kann ebenfalls über die zentrale Steuereinheit 13 geregelt werden, welche über eine weitere Steuerleitung 12 mit der Benetzungsvorrichtung 14 verbunden ist.

In dem gezeigten Ausführungsbeispiel ist in der Abstehzelle 7 ferner ein Temperatur- und/oder Druckregler 19 vorgesehen. Der Regler 19 kann beispielsweise ein Thermostat 20 aufweisen, das in der Abstehzelle 7 angeordnet ist, und mit dessen Hilfe die Temperatur in der Abstehzelle 7 auf einen vorbestimmten Wert geregelt werden kann. Die Regelung kann über die zentrale Steuereinheit 13 erfolgen, welche in der beispielhaften Ausführungsform über eine weitere Steuerleitung 12 mit dem Thermostat 20 verbunden ist. Auch wenn dies in der Fig. 1 nicht explizit gezeigt ist, kann in der Abstehzelle 7 ferner ein Druckregler vorgesehen sein, um einen vorbestimmten Druck im Inneren der Abstehzelle 7 einzustellen. Auch ein pH-Regler zum Regeln des pH-Wertes des Gemisches aus Pflanzensamen 3 und Befeuchtungsflüssigkeit 18 wäre denkbar.

Die beispielhafte Konditionieranlage 2 aus Fig. 1 ermöglicht es, das erfindungsgemäße Verfahren zum Konditionieren von Pflanzensamen durchzuführen, indem die Pflanzensamen 3 einem elektrischen Feld ausgesetzt werden. Dabei können die Pflanzensamen mittels eines elektrischen Feldes elektroporiert und es kann ein definierter Zellaufschluss durchgeführt werden. Im Rahmen der Konditionierung kann die Elastizität der Pflanzensamen 3 verbessert und auf einen vorbestimmten Bereich eingestellt werden. Somit können die Pflanzensamen, beispielsweise Körnerfrüchte, also Getreide, wie Weizen, für einen sich anschließenden Zerkleinerungsprozess, beispielsweise einen Mahlprozess vorbereitet werden, was das Mahlverhalten positiv beeinflusst. Die Behandlung mittels eines elektrischen Feldes erleichtert und beschleunigt beispielsweise die Benetzung und die Durchfeuchtung der Pflanzensamen 3 mit der Befeuchtungsflüssigkeit 18 und ermöglicht eine gezielte Beeinflussung der Elastizität der Pflanzensamen. Dies verbessert, was nachfolgend noch anhand von Versuchsbeispielen gezeigt werden wird, das Bruchverhalten der Pflanzensamen und verringert den Mehlverlust, indem die Trennung der Mehlfraktion von der Kleie verbessert wird.

In einer Ausführungsform können der Benetzungsflüssigkeit Enzyme zugesetzt werden, welche die Benetzung bzw. Durchfeuchtung beschleunigen oder auf sonstige Weise die Textur bzw. Struktur des Pflanzensamens 3 für die nachfolgende Zerkleinerung positiv beeinflussen. Es können beispielsweise hemizellulotische Enzyme eingesetzt werden, beispielsweise Hemizellulasen, Zellulasen, Glukanasen, Laccasen, Proteasen, Amylasen, welche die benötigte Abstehzeit in der Abstehzelle 7 weiter verringern und die Trennung der Samenschale vom Samenkern, beispielsweise der Kleie vom Mehlkörper bei Getreide verbessern und damit die Mahlausbeute optimieren. Zu Hemizellulasen gehören Pentosanasen, beispielsweise Arabinasen und Xylanasen (wie Endo-1-4-$\beta$-Xylanase, Endo-1-3-$\beta$-Xylanase, Exo-1-4-$\beta$-Xylanase, Exo-1-3-$\beta$-Xylanase oder Arabino-Furanosidase, Ferulasäure-Esterase, Cumarsäure-Esterase, Essigsäure-Esterase). Weitere mögliche Hemizellulasen sind Hesosanasen, wie z.B. $\beta$-Glukanase, Galaktase oder Mannase.

Neben dem Zusatz von Enzymen über die Befeuchtungsflüssigkeit 18 können Enzyme auch auf andere Weise auf Bestandteile der Pflanzensamen 3 einwirken. So können mittels der elektrischen Felder, insbesondere im Rahmen einer Elektroporation, endogene Enzyme freigesetzt werden, die, nach einer entsprechend langen Abstehzeit bzw. durch Einstellen einer für die Enzymaktivität optimalen Temperatur bzw. Drucks oder pH-Wertes anschließend über die Temperatur- und/oder Druckregelung aktiviert werden.

Mittels aller dieser Maßnahmen lässt sich die Struktur und Textur der Pflanzensamen 3 konditionieren und an die erwünschten Zerkleinerungseigenschaften des Pflanzensamens 3 anpassen. Beispielsweise kann auf diese Weise die Elastizität der Samenschale und/oder die Elastizität des Samenkorns sehr gut eingestellt werden.

Die konditionierten Pflanzensamen 3 werden nach der Konditionierung über eine Transferleitung 21 aus der Abstehzelle 7 der Zerkleinerungsvorrichtung 4 zugeführt. In der Zerkleinerungsvorrichtung 4 werden die konditionierten Pflanzensamen zerkleinert, wozu beispielsweise eine Druckzerkleinerung, Schlagzerkleinerung, Reibzerkleinerung, Schneidzerkleinerung und/oder Prallzerkleinerung oder ein Schälen eingesetzt werden kann. Zu Zerkleinerungsmaschinen zählen beispielsweise Brecher, Mühlen, Schälmaschinen oder sonstige mechanische Zerkleinerer, sowie Dampfschäler.

Die zerkleinerten Pflanzensamen 3 werden über eine Übergabe 22 von der Zerkleinerungsvorrichtung 4 in die Trennvorrichtung 5 überführt. In der Trennvorrichtung 5 werden unterschiedliche Fraktionen der zerkleinerten Pflanzensamen voneinander getrennt. Beispielsweise kann die Schale von geschälten Pflanzensamen, wie z.B. geschälten Kichererbsen, Reis und Sojabohnen getrennt werden. Mögliche Verfahren zur Trennung der Fraktionen sind beispielsweise Sieben oder Sichten. In Getreidemühlen werden oftmals Sichter eingesetzt, mittels derer Feststoffe nach definierten Kriterien wie Partikelgröße, Dichte, Trägheit und dem Schwebe- oder Schichtungsverhalten klassifiziert und somit unterschiedliche Fraktionen (also Fraktionen unterschiedlicher Partikeleigenschaften) voneinander getrennt werden können.

Die mittels Zerkleinerung erwünschte Fraktion der Pflanzensamen wird schließlich über den Ausgang 23 aus der Trennvorrichtung herausgeführt. Die Fraktion, welche noch nicht die erwünschten Eigenschaften aufweist, kann über eine Rückführleitung, gemäß der beispielhaften Ausführungsform, in die Zerkleinerungsvorrichtung 4 zurückgeführt und erneut zerkleinert werden. Selbstverständlich kann anstelle einer Rückführung diese Fraktion auch in eine weitere, zweite Zerkleinerungsvorrichtung überführt werden (nicht gezeigt).

Die Produktführung der Zerkleinerung und Trennung wird in Getreidemühlen durch Mahlen in Walzstühlen und anschließendes Sichten durchgeführt. Dabei wird ein Durchlauf durch eine Zerkleinerungsvorrichtung 4 und anschließende Trennvorrichtung 5 als Passage bezeichnet. In der beispielhaften Ausführungsform der Fig. 1 ist somit eine beispielhafte Mahlpassage 25 mit einem in einer Zerkleinerungsvorrichtung 4 durchgeführten Zerkleinerungsschritt und anschließender Trennung unterschiedlicher Fraktionen in einer Trennvorrichtung 5 gezeigt.

Nachfolgend werden anhand einiger konkreter Versuchsergebnisse beispielhafte Ausführungsformen des erfindungsgemäßen Verfahrens und die damit erzielten Vorteile dargestellt.

Für die Behandlung des Getreides mit gepulsten elektrischen Feldern (PEF) wurden die Körner mit Wasser bedeckt. Es wurde ein Verhältnis von 100 g (Getreide): 800 g (Wasser) gewählt. Es hätte jedoch auch jedes andere Verhältnis gewählt werden können, bei dem gewährleistet werden kann, dass das Getreide vollständig benetzt ist. Die Behandlung mit PEF erfolgte in einem Batchsystem mit einer Behandlungszelle, die ein Fassungsvermögen von 900 ml aufweist. Die angewandte Feldstärke betrug 3 kV/cm, der Energieeintrag 10 kJ/kg. Anschließend wurden die Körner in ein Sieb überführt und vom Behandlungswasser getrennt. Bereits unmittelbar nach der PEF-Behandlung (bei welcher die Körner nur 2 Minuten und somit deutlich weniger als die übliche Stunde mit Wasser gemacht war) verblieb ein Anteil von etwa 18 g Wasser als Oberflächenbenetzung auf den Körnern.

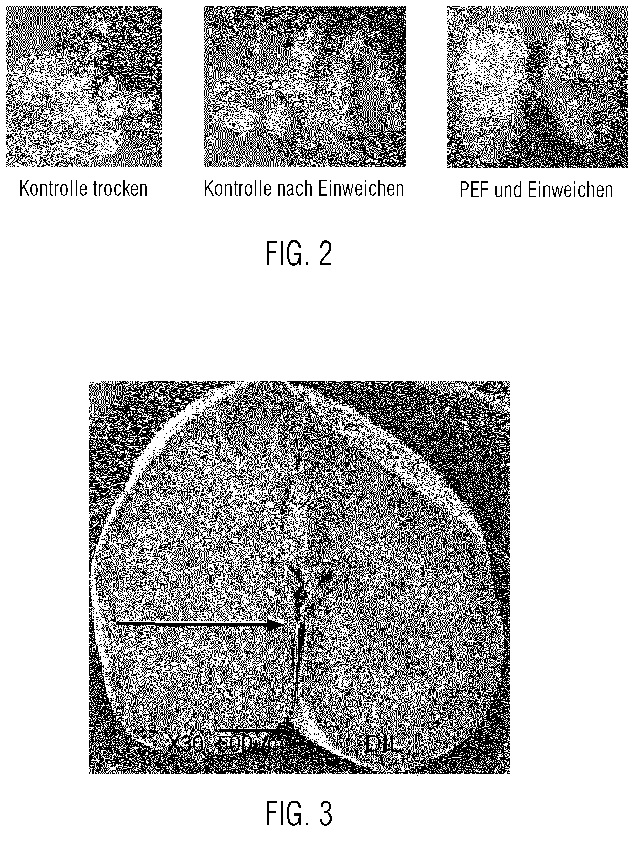

Nach der Behandlung erfolgte eine Bestimmung der Textureigenschaften mittels Texture Analyser im Hinblick auf Kompressions- und Schnittkraft. Nach einer PEF Behandlung und Einweichen wurde eine Erhöhung der maximalen Kompressionskraft von 34,94 kg für unbehandelte Proben auf 42,96 kg festgestellt. Das Bruchverhalten der PEF-behandelten Probem zeigte sich somit in vorteilhafter Weise elastischer und weniger spröde als das unbehandelter Kontrollproben. Die Samenschale PEF-behandelter Körner zerfällt somit in weniger Teil und läßt sich somit einfacher Mehlkörper abtrennen, als bei der trockenen oder der eingeweichten, aber nicht PEF-behandelten Probe (siehe Fig. 2).

Die Analyse zur Wasserverteilung im Korn wurde direkt nach der Behandlung, nach 10 und 30 min sowie nach 1, 2, 4, 10 und 24 Stunden durchgeführt. Eine Kontrollprobe wurde parallel mit derselben Methode analysiert. Mittels EDX Analyse wurde die Verteilung der Elemente in Körnern ermittelt und das Eindringen von Wasser durch Zunahme des Anteils an Sauerstoff charakterisiert. Die Untersuchungspositionen sind in Fig. 3 dargestellt.

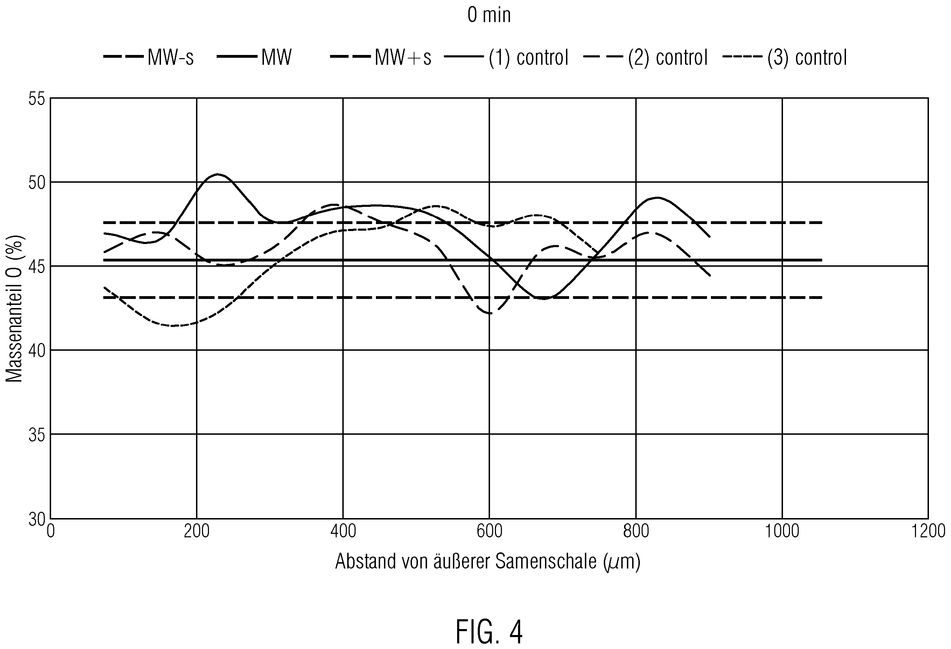

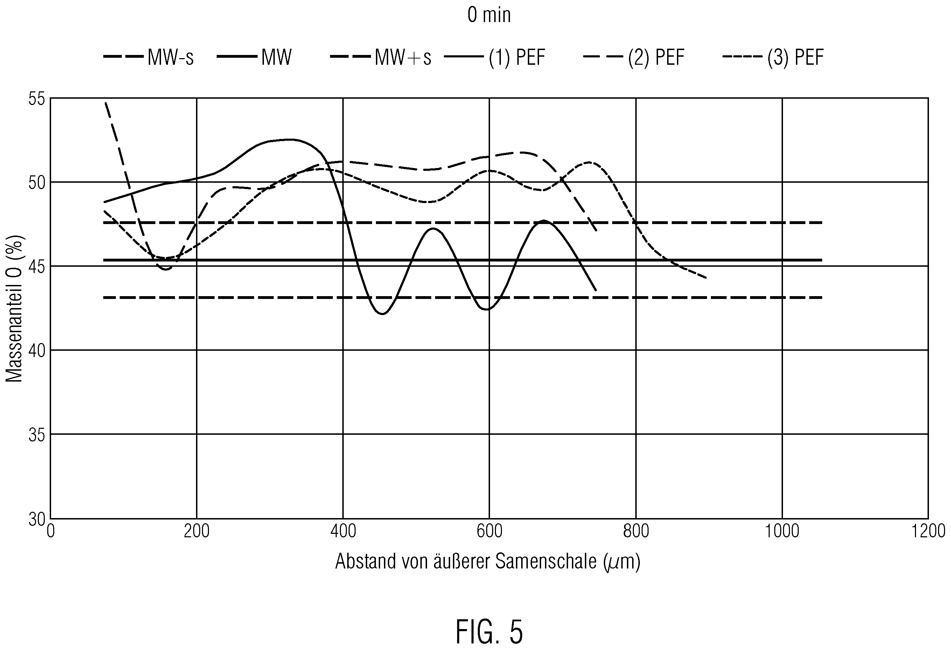

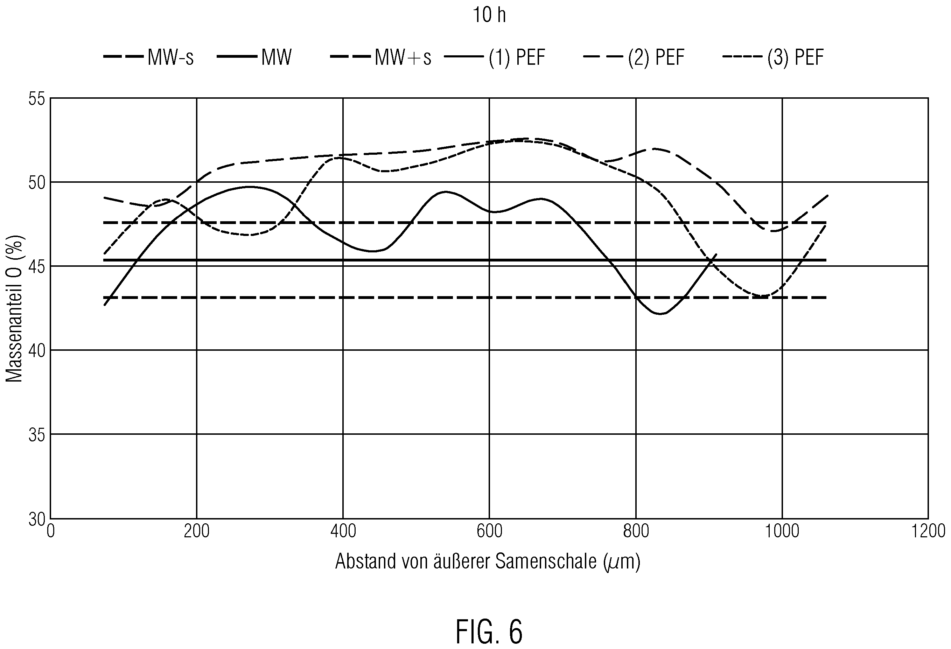

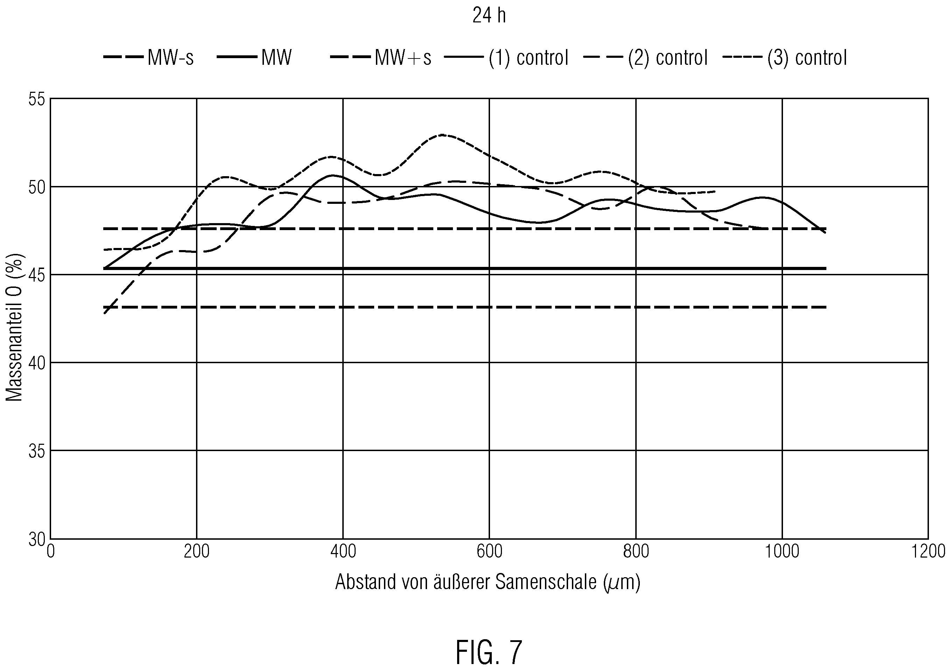

Die mittels PEF behandelten Weizenkörner wiesen wie in den Figs. 4 bis 7 gezeigt bereits beim Beginn der Durchfeuchtung eine bessere Wasserverteilung als die unbehandelten Proben auf, was an dem Linienverlauf oberhalb des Mittelwertes (MW) plus Standardabweichung (S) zu erkennen ist. Bereits nach 10 Stunden hatten die PEF behandelten Körner eine für die Vermahlung optimale gleichmäßige Durchfeuchtung des Mehlkerns, während diese bei unbehandelten Proben erst nach 24 Stunden erreicht wurde.

Die dadurch bewirkte Lockerung der Mehlkörperstruktur und Lockerung der Verbindung zwischen Aleuronschicht und Mehlkern ermöglichte die Verkürzung der Abstehzeit bei vergleichbarer Mehlausbeute.

Nachfolgend wird anhand eines Versuchsbeispiels eine mögliche Ausführungsform der Erfindung beispielhaft dargestellt.

Für die Versuche wurde Weizen (Triticum aestivum L., Winterweichweizen, Sorte Butaro, August 2017) einer Charge in 400-g-Portionen in den Behandlungsbehälter einer diskontinuierlichen PEF-Anlage gefüllt. Anschließend wurden 300 mL Leitungswasser (ggf. mit darin gelöstem Enzym Xylanase, 10 - 100 ppm, gerechnet auf Getreide) aufgegossen und der Behälter für 20 s mit PEF behandelt. Es wurden 31 Impulse mit je 30 kV und 450 J an die Körner abgegeben, der spezifische Energieeintrag betrug pro Batch 20 kJ/kg. Nach einer Kontaktzeit mit dem Wasser von insgesamt 60 s wurde das Wasser abzentrifugiert. Der Feuchtegehalt der Körner lag nach dem Zentrifugieren zwischen 15,2 und 16,4 %. Pro Einstellung erfolgten 8 Versuche, um eine ausreichende Getreidemenge für die Vermahlung auf einer Labormühle (Bühler MLU) zu erhalten.

Die Mehlausbeute (Extraktionsrate) wurde auf einen Aschewert von 0,63 eingestellt. Der Aschegehalt ist ein entscheidendes Qualitätsmerkmal und korreliert mit der Extraktionsrate. Die Extraktionsrate wird ermittelt aus dem Verhältnis des Gewichtsanteils des Mehls zum Gesamtgewicht in Prozent. Dies ist ein Index der Effizienz des Mahlprozesses, indem das Gewicht des gesamten Outputs mit dem Ausgangsgewicht verglichen wird. Bei den Versuchen wurde der Gewichtsanteil der Passagenmehle und der Kleieschleudermehle zusammengerechnet und im Verhältnis zum eingewogenen Weizen berechnet.

Formel für die Extraktionsrate:

$$E = \frac{EP + EK}{EG} * 100$$

E = Extraktionsrate [%];

EP = Extraktion Passagenmehl [g];

EK = Extraktion Kleieschleudermehl [g];

EG = gesamte Einwaage [g]

Außerdem wurde die Extraktionsrate mit angepasstem Aschegehalt als eine Kenngröße hinzugezogen. Diese wurde durch eine Formel errechnet, welche den Ascheprozentwert fixiert, da dieser ein Qualitätsmerkmal ist und einen Einfluss auf die Extraktionsrate hat.

Formel für die angepasste Extraktionsrate:

$$EP * AP + AEK * AK = EG * AG$$

$$EG = EP + AEK$$

$$AEK = \frac{EP * (AG - AP)}{AK - AG}$$

$$AE = \frac{AEK + EP}{EG}$$

EP = Extraktion Passagenmehl [g]

AEK = angepasste Extraktion Kleieschleudermehl [g]

EG = gesamte Einwaage [g]

AP = Asche Passagenmehl [% i. Tr.]

AK = Asche Kleieschleudermehl [% i. Tr.]

AG = Asche Sollprozentwert

AE = angepasster Extraktionswert

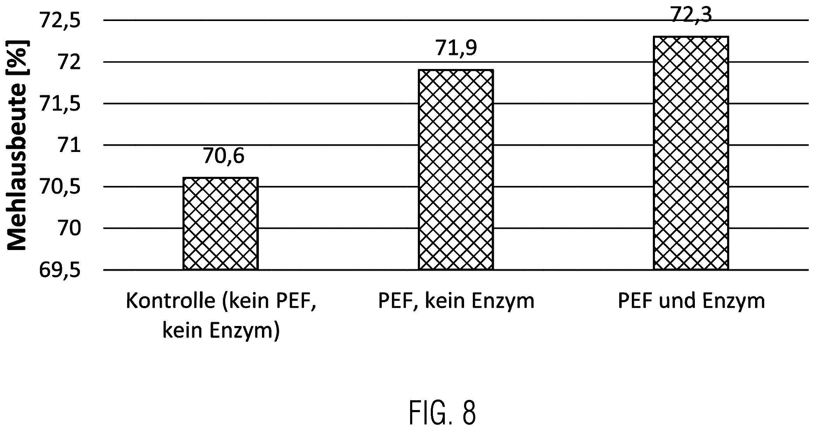

Fig. 8 zeigt, dass die Konditionierung mit einem elektrischen Feld, sowohl alleine als auch in Kombination mit dem Enzym Xylanase die Mehlausbeute überraschenderweise erhöht. Gegenüber der unbehandelten Referenz wurde die Mehrausbeute um 1,4 % durch PEF und um 1,8 % durch die Kombination vom PEF und Enzym verbessert.

**Bezugszeichen**

1    Anlage
2    Konditionierungsanlage

3     Pflanzensamen
4     Zerkleinerungsvorrichtung
5     Trennvorrichtung
6     Kondensator
7     Abstehzelle
8     Dosiervorrichtung
9     Elektroden
10    Energieleitung
11    Spannungsquelle
12    Steuerleitung
13    Steuereinheit
14    Benetzungsvorrichtung
15    Vorratsbehälter
16    Zuführleitung
17    Sprühvorrichtung
18    Befeuchtungsflüssigkeit
19    Temperatur- und/oder Druckregler
20    Thermostat
21    Transferleitung
22    Übergabe
23    Ausgang
24    Rückführleitung
25    Passage

**Patentansprüche**

1. Verfahren zum Konditionieren von Pflanzensamen (3) für die Zerkleinerung und zur Verbesserung der Durchfeuchtung der Pflanzensamen (3) im Vergleich zu unbehandelten, nicht konditionierten Pflanzensamen, das **dadurch gekennzeichnet ist, dass** die Pflanzensamen (3) einem nicht-thermisch wirkenden elektrischen Feld ausgesetzt werden.

2. Verfahren nach Anspruch 1, wobei die Pflanzensamen (3) mittels des elektrischen Feldes elektroporiert werden.

3. Verfahren nach Anspruch 1 oder 2, wobei beim Behandeln mit dem elektrischen Feld ein Energieeintrag von 1 kJ/kg bis 20 kJ/kg, vorzugsweise von 8 kJ/kg bis 12 kJ/kg in die Pflanzensamen (3) erfolgt.

4. Verfahren nach einem der Ansprüche 1 bis 3, wobei die Pflanzensamen (3) einer elektrischen Feldstärke von 0,3 kV/cm bis 10 kV/cm, vorzugsweise von 2 kV/cm bis 4 kV/cm ausgesetzt werden.

5. Verfahren nach einem der Ansprüche 1 bis 4, wobei die Pflanzensamen (3) einem gepulsten elektrischen Feld ausgesetzt werden.

6. Verfahren nach einem der Ansprüche 1 bis 5, wobei die Elastizität der Pflanzensamen (3) beim Konditionieren im Vergleich zu nicht-konditionierten Pflanzensamen verbessert wird.

7. Verfahren nach Anspruch 6, wobei die Elastizität der Samenschale und/oder die Elastizität des Samenkerns, insbesondere des Endosperms, beim Konditionieren modifiziert wird.

8. Verfahren nach einem der Ansprüche 1 bis 7, wobei den Pflanzensamen (3) eine Befeuchtungsflüssigkeit (18) zugegeben wird, bevor oder während sie dem elektrischen Feld ausgesetzt werden.

9. Verfahren nach einem der Ansprüche 1 bis 8, wobei die Pflanzensamen (3) einem vorbestimmten Druck und/oder einer vorbestimmten Temperatur ausgesetzt werden.

10. Verfahren nach einem der Ansprüche 1 bis 9, wobei Enzyme auf Bestandteile der Pflanzensamen (3) einwirken.

11. Verfahren nach Anspruch 10, wobei die Enzyme ausgewählt sind aus der Gruppe der Hemizellulasen, Zellulasen, Glukanasen, Laccasen, Proteasen und Amylasen.

12. Anlage (1) zur Zerkleinerung von Pflanzensamen (3), umfassend eine Konditionierungsanlage (2) zur Konditionierung der Pflanzensamen (3), eine Zerkleinerungsvorrichtung (4) zur Zerkleinerung der konditionierten Pflanzensamen (3), und eine Trennvorrichtung (5) zum Trennen unterschiedlicher Fraktionen der zerkleinerten Pflanzensamen, wobei die Konditionierungsanlage (2) einen Kondensator (6) zur Erzeugung eines auf die Pflanzensamen (3) nicht-thermisch wirkenden elektrischen Feldes zur Verbesserung der Durchfeuchtung der Pflanzensamen (3) im Vergleich zu unbehandelten, nicht konditionierten Pflanzensamen aufweist, und wobei die Konditionierungsanlage (2) ferner eine Benetzungsvorrichtung (14) zur Befeuchtung der Pflanzensamen (3) aufweist.

13. Anlage (1) gemäß Anspruch 12, wobei die Konditionierungsanlage (2) ferner eine Abstehzelle (7) aufweist.

14. Anlage (1) nach Anspruch 12 oder 13, wobei die Konditionierungsanlage (2) einen Temperatur- und/oder einen Druckregler (19) aufweist.

15. Anlage (1) gemäß einem der Ansprüche 12 bis 14, wobei der Kondensator (6) wenigstens zwei Elektroden (9) umfasst, die mit einem Impulsgenerator als Spannungsquelle (11) verbunden sind.


**Claims**

1. Method for conditioning plant seeds (3) for disintegrating and for improving the wettability of the plant seeds (3) compared to untreated, non-conditioned plant seeds, **characterized in that** the plant seeds (3) are exposed to a non-thermally acting electrical field.

2. Method according to claim 1, wherein the plant seeds (3) are electroporated by means of the electrical field.

3. Method according to claim 1 or 2, wherein in the treatment with the electrical field, an energy input of 1 kJ/kg to 20 kJ/kg, preferably of 8 kJ/kg to 12 kJ/kg, into the plant seeds (3) is accomplished.

4. Method according to one of claims 1 to 3, wherein the plant seeds (3) are exposed to an electrical field strength of 0.3 kV/cm to 10 kV/cm, preferably of 2 kV/cm to 4 kV/cm.

5. Method according to one of claims 1 to 4, wherein the plant seeds (3) are exposed to a pulsed electrical field.

6. Method according to one of claims 1 to 5, wherein the elasticity of the plant seeds (3) is improved during conditioning compared to non-conditioned plant seeds.

7. Method according to claim 6, wherein the elasticity of the seed coat and/or the elasticity of the seed kernel, in particular the endosperm, is modified during conditioning.

8. Method according to one of claims 1 to 7, wherein a moistening liquid (18) is added to the plant seeds (3) before or while they are exposed to the electrical field.

9. Method according to one of claims 1 to 8, wherein the plant seeds (3) are exposed to a predetermined pressure and/or a predetermined temperature.

10. Method according to one of claims 1 to 9, wherein enzymes act on components of the plant seeds (3).

11. Method according to claim 10, wherein the enzymes are selected from the group of hemicellulases, cellulases, glucanases, laccases, proteases und amylases.

12. System (1) for disintegration of plant seeds (3), comprising a conditioning system (2) for conditioning the plant seeds (3), a disintegration device (4) for disintegration of the conditioned plant seeds (3), and a separating device (5) for separating different fractions of the disintegrated plant seeds, wherein the conditioning system (2) has a capacitor (6) for generating a non-thermally acting electrical field that acts on the plant seeds (3) for improving the wettability of the plant seeds (3) compared to untreated, non-conditioned plant seeds, and wherein the conditioning system (2) has a wetting device (14) for moistening the plant seeds (3).

13. System (1) according to claim 12, wherein the conditioning system (2) further has a tempering cell (7).

**14.** System (1) according to claim 12 or 13, wherein the conditioning system (2) has a temperature and/or pressure controller (19).

**15.** System (1) according to one of claims 12 to 14, wherein the capacitor (6) comprises at least two electrodes (9) which are connected to a pulse generator as a voltage source (11).

**Revendications**

**1.** Procédé pour le conditionnement de graines de plantes (3) pour le broyage et pour l'amélioration de l'humidification des graines de plantes (3) par rapport à des graines de plantes non traitées et non conditionnées, qui est **caractérisé en ce que** les graines de plantes (3) sont exposées à un champ électrique à effet non thermique.

**2.** Procédé selon la revendication 1, où les graines de plantes (3) sont électroporées au moyen du champ électrique.

**3.** Procédé selon la revendication 1 ou 2, où, lors du traitement avec le champ électrique, un apport d'énergie de 1 kJ/kg à 20 kJ/kg, de préférence de 8 kJ/kg à 12 kJ/kg, se produit dans les graines de plantes (3).

**4.** Procédé selon l'une des revendications 1 à 3, où les graines de plantes (3) sont exposées à une intensité de champ électrique de 0,3 kV/cm à 10 kV/cm, de préférence de 2 kV/cm à 4 kV/cm.

**5.** Procédé selon l'une des revendications 1 à 4, où les graines de plantes (3) sont exposées à un champ électrique pulsé.

**6.** Procédé selon l'une des revendications 1 à 5, où l'élasticité des graines de plantes (3) est améliorée lors du conditionnement par rapport à des graines de plantes non conditionnées.

**7.** Procédé selon la revendication 6, où l'élasticité du tégument de la graine et/ou l'élasticité du noyau de la graine, en particulier de l'endosperme, sont modifiées lors du conditionnement.

**8.** Procédé selon l'une des revendications 1 à 7, où un liquide d'humidification (18) est ajouté aux graines de plantes (3) avant ou pendant leur exposition au champ électrique.

**9.** Procédé selon l'une des revendications 1 à 8, où les graines de plantes (3) sont soumises à une pression prédéterminée et/ou à une température prédéterminée.

**10.** Procédé selon l'une des revendications 1 à 9, où des enzymes agissent sur des constituants des graines végétales (3).

**11.** Procédé selon la revendication 10, où les enzymes sont choisis parmi le groupe comprenant les hémicellulases, les cellulases, les glucanases, les laccases, les protéases et les amylases.

**12.** Installation (1) pour le broyage de graines de plantes (3), comprenant une installation de conditionnement (2) pour le conditionnement des graines de plantes (3), un dispositif de broyage (4) pour le broyage des plantes conditionnées (3) et un dispositif de séparation (5) pour séparer différentes fractions des graines de plantes broyées, où l'installation de conditionnement (2) comporte un condensateur (6) pour la génération d'un champ électrique à effet non-thermique agissant sur les graines de plantes (3) pour l'amélioration de l'humidification des graines de plantes (3) par rapport à des graines de plantes non traitées, non conditionnées, et où l'installation de conditionnement (2) comporte en outre un dispositif d'humectage (14) pour l'humidification des graines de plantes (3).

**13.** Installation (1) selon la revendication 12, où l'installation de conditionnement (2) comporte en outre une cellule de décantation (7).

**14.** Installation (1) selon la revendication 12 ou 13, où l'installation de conditionnement (2) comporte un régulateur de température et/ou de pression (19).

**15.** Installation (1) selon l'une des revendications 12 à 14, où le condensateur (6) comprend au moins deux électrodes (9) connectées à un générateur d'impulsions servant de source de tension (11).

FIG. 1

Kontrolle trocken          Kontrolle nach Einweichen          PEF und Einweichen

FIG. 2

FIG. 3

0 min

- - - MW-s ——— MW - - - MW+s ——— (1) control — — (2) control - - - - (3) control

FIG. 4

EP 3 959 016 B1

FIG. 5

FIG. 6

EP 3 959 016 B1

24 h

FIG. 7

EP 3 959 016 B1

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4127290 A1
- WO 03024242 A1
- FR 2685223 A1
- DE 102017202684 A1
- DE 735937 C

**In der Beschreibung aufgeführte Nicht-Patentliteratur**

- **MÜNZING, K.** Neue Erkenntnisse über Netzungs- und Aufmischeffekt bei Mahlweizen. *Mühle Mischfutter*, 2013, vol. 150 (14), 246